# EUROPEAN PATENT SPECIFICATION

(11) **EP 3 513 684 B1**
(45) Date of publication and mention of the grant of the patent: **12.02.2020**
(21) Application number: 19151759.8
(22) Date of filing: 15.01.2019
(51) Int. Cl.: A47B 91/08, B60B 33/00, A47B 91/00, E04G 1/24, A47B 91/02, A47B 96/14

(54) **MODULAR SYSTEM FOR RETAIL DISPLAY**
MODULARES SYSTEM FÜR EIN WARENREGAL
SYSTÈME MODULAIRE D'AFFICHAGE AU DÉTAIL

(30) Priority: 17.01.2018 IT 201800001130
(43) Date of publication of application: 24.07.2019
(73) Proprietor: CEFLA S.C., 40026 Imola (IT)
(72) Inventor: Passanti, Andrea, 40026 Imola (IT)
(74) Representative: Del Nero, Susanna

(56) References cited:
- EP-A1- 2 807 958
- WO-A2-03/013315
- WO-A2-2006/116226
- JP-A- H05 294 411
- US-A- 1 481 396
- US-A- 5 724 772
- Chatsworth Products Inc.: "TERAFRAME FLOOR ANCHORS 34587", , 12 July 2012 (2012-07-12), XP055497628, Internet Retrieved from the Internet: URL:http://objects.eanixter.com/PD331886.P DF [retrieved on 2018-08-06]

## Description

The present invention relates to the technical field of furniture for large retail stores, and in particular to a modular system which can be assembled and disassembled to build sale displays (shelving, gondola shelving, tables, containers, etc.).

Such modular systems are well known in the art; nonetheless, the basic components of most of them must be soldered, or fixed through the use of joints, made of plastics or aluminium.

The same basic components (upright, crosspiece, stringer) can be provided in a limited number to build different kind of final objects like shelving, gondola shelving, tables, containers, etc. Nonetheless, once the basic components were soldered to build e.g. a gondola shelving, the finished gondola shelving cannot be disassembled anymore. The main advantage of the soldered system is their stability, which is maximal, while their main drawback is the impossibility of assembling and disassembling their basic components. They totally lack flexibility.

E.g., DE29914238U of Tegometall describes a modular system making use of joints for the joining of components.

Modular systems with joints tend to be fairly stable. Nonetheless, a drawback of the modular systems making use of joints is linked to the production of different kinds of joints, e.g. end and intermediate joints, angle joints, two-way joints, three-way joints. This leads to a rise in the number and variety of the components which must be manufactured and stored, which is a drawback for both manufacturers and points of sale.

A modular system comprising three different kinds of basic components (upright, crosspiece, stringer), which can be easily assembled and disassembled with the simple use of a hammer, comprises an upright element made of a section bar having a square transversal section, and pairs of slots placed at a regular distance to each other along the longitudinal axis of said upright element; said pair of slots being present on one side of said upright or on the two opposed sides of said upright.

The three basic components comprise a crosspiece element and a stringer element, and are provided in combination with reciprocal hooking members; in an assembled condition, each of said components is aligned parallel to one direction of three perpendicular directions, while:
- The upright element is provided at least on one of its sides with a row of slots pairs equidistant to each other, said side being parallel to the longitudinal axis of at least one stringer;
- Said stringer is provided at each end with a wing with the longitudinal axis of the wing oriented perpendicularly to the longitudinal axis of the stringer itself, which wing extends parallel to the axis of said upright, in the coupled condition, and is provided with at least two hooks aligned to each other in a direction parallel to the slot rows on said upright and engaging at least two slots of at least one row of slots;
- Said hooks and said slots are distanced respectively from the top side of said upright and from the top side of said stringer, so that the top side of the stringer is co-planar with the top side of said upright or to a plan parallel to said top side of said upright in assembled condition; and
- When assembled to said upright, said crosspiece extends with its longitudinal axis perpendicular to the upright side provided with slot rows;
- Said crosspiece has at its ends two extensions which extend parallel to said slot rows or to the longitudinal axis of said upright;
- Each extension bears at least two pairs of teeth aligned in the direction of a row of slots and coinciding at least with two slots of one slot rows;
- Said teeth being distanced from the top side of said crosspiece so that the top side of said crosspiece is co-planar with the top side of the upright in coupled condition and co-planar to the top side of the stringer and of the upright, or co-planar to the top plane of the stringer.

The assembling of the components of the modular system comprises the following steps:
a. Assembling of a crosspiece on an upright
   inserting a crosspiece in an upright so that all the pairs of teeth sit into place, with their respective slit leaning on the lower portion of the slot pairs; said assembling being performed using a hammer, so that each protrusion fits in in the same slot occupied by an end tooth;
b. Assembling a stringer on the assembled upright and crosspiece
   fitting in the stringer on the assembled upright-crosspiece, inserting two hooks of the stringer in the free portion of two slots and one hook in the intermediate free slot; once the stringer sits into place on the upright, said stringer is hammered down so that the peduncle of each hook sits into place on the lower portion of the slots.

According to a feature of the specific modular system, the extension of the crosspiece is provided with at least two pairs of teeth forming two rows of hooks which are parallel to each other, each coinciding with the slots of one of the two rows, so that the coupling between upright and crosspiece occurs engaging at least two slots of each row, while the hooks of the stringer engage, flanking the teeth of the stringer, at least some of the slots of a row wherein the teeth of the crosspiece are engaged.

According to an embodiment, each extension of said crosspiece is provided with three pairs of teeth, which teeth are placed on two parallel rows, each coinciding with a row of slots, which are parallel, too.

According to a further embodiment, each wing of said stringer is provided with three hooks placed on one row, coinciding with a row of slots.

A further embodiment provides that the crosspieces that are meant to engage the lower portion of the upright are the same as those for the upper portion of the upright, while their extensions are oriented in the opposed direction with respect to the crosspieces meant for the upper portion of the upright.

According to a further embodiment, the same kind of stringer is used for the coupling to the upper or lower portion of the uprights, the stringer being overturned in order to assemble it to the upper or lower portion of the uprights.

An improvement provides that for the assembling of structures, e.g. retail display structures, said crosspiece is provided with a U-shape comprising a tubular section bar connecting two extensions which are the U-arms; the upper connection crosspiece having a downward U-shape and the lower connection crosspiece an upward U-shape; said extensions having three pair of L-shaped teeth with a downward slit on the internal side of said L for fitting in said slots of upright; said teeth protruding from said stringer in the direction of the longitudinal axis of said stringer; said extension having a protrusion in order to stabilize the removable fitting in between stringer and upright.

In an embodiment, said stringer is provided with a U-shape comprising a tubular section bar linking two wings constituting the arms of said U; wings and tubular section bar being connected through the presence of a gusset having a rib with a development having a portion parallel to said tubular section bar, a portion perpendicular to said tubular section bar, and a portion connecting the two said portions; said stringer having three hooks with an isosceles trapezium shape, wherein the larger base of the isosceles trapezium is connected through a peduncle having dimensions smaller than said larger base; said hooks being oriented perpendicularly with respect to the longitudinal axis of the tubular section bar, and protruding below it on the side of said gusset opposed to the rib.

A further feature provides that each pair of teeth of the crosspiece fits in a corresponding pair of slots, two pair of teeth being distanced so that a pair of slots remains free in the assembled condition, while the hooks of said stringer fit in the free portion of at least two slots wherein a corresponding pair of the teeth of said crosspiece is engaged, and in the slot which remained free.

In particular, the function of the present invention is limiting the number of different versions of uprights to be produced to obtain the maximal versatility of the display modular system. More particularly, the present invention allows to use the same uprights leaning their lower end to the ground, even with the coupling of the lower end to a pre-existing base for shelving.

It is worthwhile noting that assemblies base+upright are well known in the art. In retail display systems, the assembly base+upright provides a ground support for shelving. The patent EP2807958B1 of the same applicant describes a coupling system of said base to an upright, capable of providing an excellent mechanical stability to said shelving.

WO03013315 in the name of Anthony INC. describes a small base for an upright coupled to a base making part of a modular system, said uprights comprising a tubular transversal section, or at least a lower or upper terminal segment with transversal tubular section; said base being provided with an essentially parallelepiped shape with polygonal transversal section, optionally a square section, and comprising an upper, top-oriented portion and a lower, down-oriented portion; wherein said small base is used in combination, both with uprights made of a linear profile, and with assemblies made of the combination of an upright and a base element, said base fitting in the terminal portion of said upright thanks to the presence of a groove on at least three sides of said small base, which groove is provided with a shape and dimensions substantially correspondent to the shape and dimensions of the dimensions of the upright outer wall, in correspondence of one of its ends, the upright being provided with coupling means.

WO 2006116226 of Carpin MFG Inc. describes feet (glides) for furniture intended for fitting in the furniture legs; said feet (glides) are preferably provided with sound deadening properties.

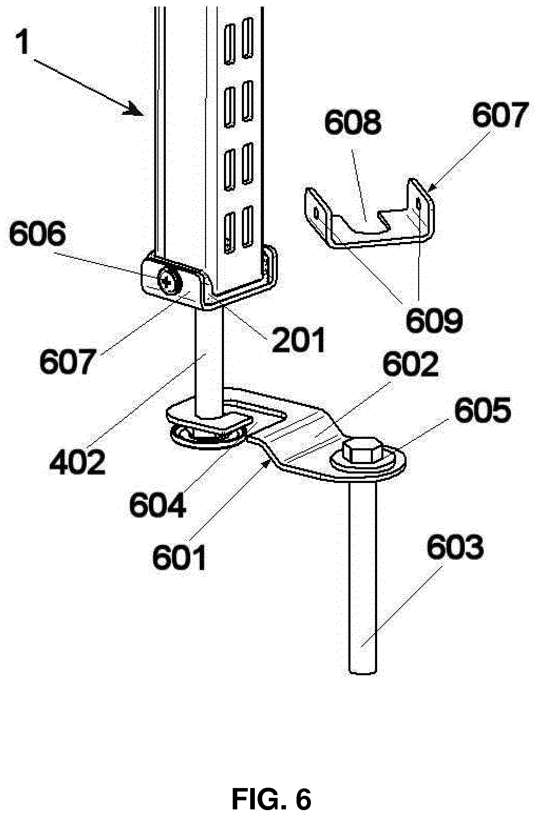

The document «Teraframe Floor Anchors 34587» of Chatworth Product Inc. describes a system for anchoring furniture to the floor substantially very similar to the floor anchoring system 601 shown in Figure 6.

Aim of the present invention is limiting the number of upright versions to be produced in order to obtain the maximal versatility of the display modular system.

This object is achieved by an apparatus and a method having the features of the independent claim. Advantageous embodiments and refinements are specified in claims dependent thereon.

The solution lies in a modular system with a small base which is removably assembled on said upright thanks to a fitting in system. Said small base is built so that it can be used both with single uprights, and with upright+base assemblies.

In particular, said small base has a parallelepiped shape with square section; the side of the parallelepiped oriented toward the ground is essentially smooth, provided with two holes for inserting two distinct screws working as feet leaning on the ground through the corresponding enlarged head of said screws.

The opposed side of said parallelepiped oriented toward the upright has a groove housing the terminal part of the outer wall of an upright, preferably formed as a tubular profile or at least comprising end tubular segments, and a pair of seats meant to optionally house the wings of an upright base.

Moreover, the small base according to the present invention can advantageously be coupled to a ground-fixing system in the case of an upright used without base, and alternatively coupled to a wheel, again without base, to obtain mobile display systems, like e.g. containers, tables, etc.

Thanks to the present invention, the same uprights can be used to assemble modular systems like the above-described one, and shelving provided with a base like the one described in EP2807958B1. More particularly, the present invention allows to use the same uprights leaning their lower end to ground with the intermediation of the small base according to the present invention.

The first advantage of the present invention is the optimization of the number of upright versions to be produced.

The second advantage of the present invention is the possibility to use standard bases already in use according to patent EP2807958B1 in combination with the other basic components of the above-described display modular system.

A third advantage is that the same small base, with the addition of an accessory, can be used for all the structures mounted on wheels.

Further advantages and properties of the present invention are disclosed in the following description, in which exemplary embodiments of the present invention are explained in detail based on the drawings:
- Figure 1: Axonometric bottom view of the small base;
- Figure 2: Axonometric top view of the small base;
- Figure 3: Lateral view of an assembly upright-small base-base, with a small;
- Figure 4: Axonometric view of a small base with an upright without base, wherein a portion of the upright was removed to allow to appreciate the reciprocal relationship;
- Figure 5A, 5B: Axonometric view of the assembly upright-small base-base with a portion of upright removed to show the reciprocal relationship;
- Figure 6: Axonometric view of a small base with a ground-fixing system;
- Figure 7A, 7B: Axonometric and exploded view of the accessory allowing the assembling of the small base on a wheel;
- Figure 8: Axonometric view of an anti-release plate for wheel;
- Figure 9: Axonometric view from outside of the three basic components (upright, crosspiece and stringer) of the display modular system assembled in a finished object;
- Figure 10: Axonometric view from inside of the three basic components (upright, crosspiece and stringer) of the display modular system assembled in a finished object;
- Figure 11: Axonometric view of two uprights of different kind;
- Figure 12: Axonometric view of two crosspieces, the first for upper connection, the second for lower connection;
- Figure 13: Axonometric view of a stringer.

It is worthwhile pointing out that the three basic components of the display modular system are: upright 1, crosspiece 2 and stringer 3.

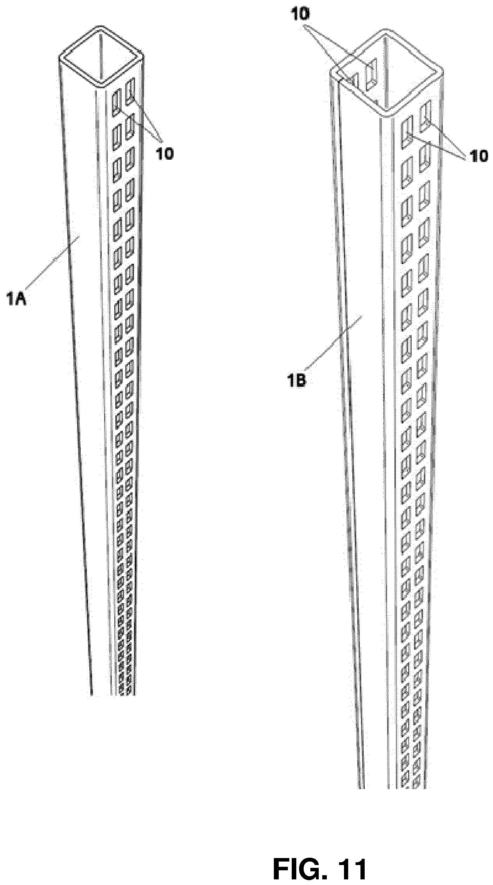

The uprights 1 are provided in two versions: one-side slotted 1A, bearing pairs of regularly distanced slots on one side only of the square section of said upright, and two-side slotted uprights 1B, bearing pairs of slots regularly spaced on the two opposed sides of the square section of the upright (see Figure 11). The following description makes reference to the use of the small base 201 in combination indifferently with a one-side slotted upright 1A or with a two-side slotted upright 1B. In the Figures the upright is indicated with 1, meaning that it can indifferently be a one-side slotted upright 1A or a two-side slotted upright 1B.

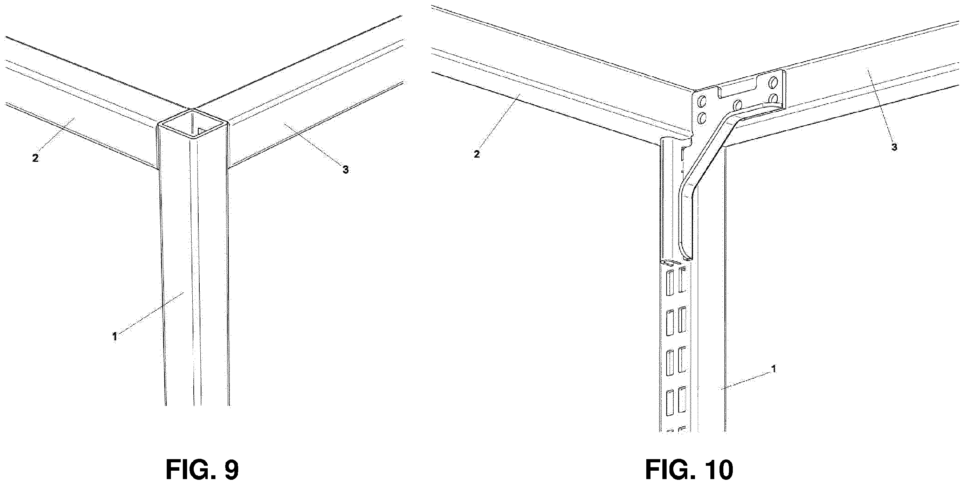

The Figures 9 to 13 show the display modular system for the display of goods, and are described in detail to allow to better highlight the modularity of the system, and the function and the coupling of small base 201.

Figure 9 shows an axonometric view from outside the corner of the assembled three basic components: upright 1, crosspiece 2 and stringer 3, as assembled in a finished object. Already from this Figure one can appreciate that the three components assembled in in the finished object define a plane (upper connection).

Figure 10 shows an axonometric view from inside the corner of the assembled three basic components: upright 1, crosspiece 2 and stringer 3, as assembled in a finished object. In the preferred embodiment, upright 1, tubular section bar 24 of crosspiece 2 and tubular section bar 34 of stringer 3 have the same square transversal section.

Figure 11 shows an upright 1A and an upright 1B. Uprights 1 have a square transversal section wherein the pairs of slots 10 are provided on one side only (one-side slotted upright, 1A), or on two opposed sides (two-side slotted upright, 1B).

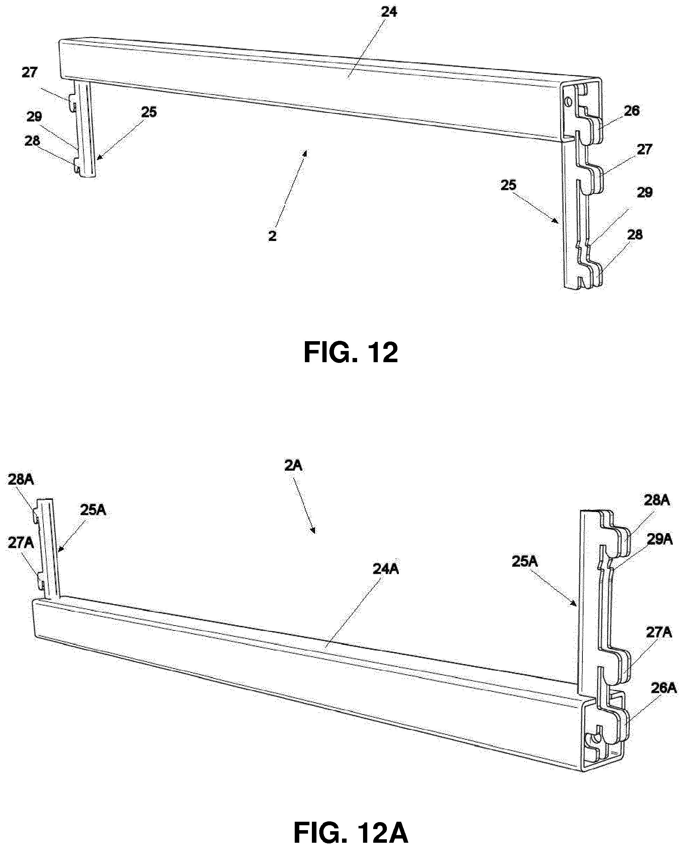

Figure 12 shows a crosspiece 2 allowing to obtain one upward plane among upright, crosspiece and stringer, (upper connection), which overall has an upside down U shape, with downward oriented arms of the U. Said crosspiece 2 has a tubular section bar 24 connecting the two U arms; at its ends there are provided two symmetrical extensions (U arms) provided with three pairs of teeth, a first pair of teeth 26 adjacent to said tubular section bar 24, an intermediate pair 27, and a terminal pair 28. Figure 12A shows a crosspiece 2A allowing to obtain a plane among crosspiece and stringer oriented downward (lower connection), which has overall a U shape. The difference between upper connection crosspiece 2 and lower connection crosspiece 2A is that the extensions 25 A have their three pairs of teeth always oriented downward, but said extensions 25 A are translated upward. The three pairs of teeth 26, 27, 28 are placed at a distance from each other such as to allow their fitting in into the slots of uprights 1A or 1B. It is worthwhile noting that the pair of teeth 26 and 27 have a distance allowing their fitting in two adjacent slots, while the pair of teeth 28 is placed so as to allow the fitting in while skipping the pair of slots immediately under the one allowing the fitting of the intermediate teeth pair 27. In the portion of extension 25, 25A, between the pair of teeth 27 and 28 or 27A and 28A which are farther from each other a small protrusion 29, 29A is placed, protruding from the border of the extension 25. Once the components are assembled, said protrusion 29, 29A fits in upright 1. The pairs of teeth 26, 26A; 27, 27A; 28, 28A have an L-shape and a slit oriented downward, which is long about half the overall dimension of the tooth. The pairs of teeth 26, 26A; 27, 27A; 28, 28A protrude from the two ends of crosspieces 2, 2A in the longitudinal direction of the crosspiece itself. Said extensions 25 are produced U-bending a portion of metal sheet and soldering said extensions inside said tubular section bar 24, so that nothing can be seen from outside.

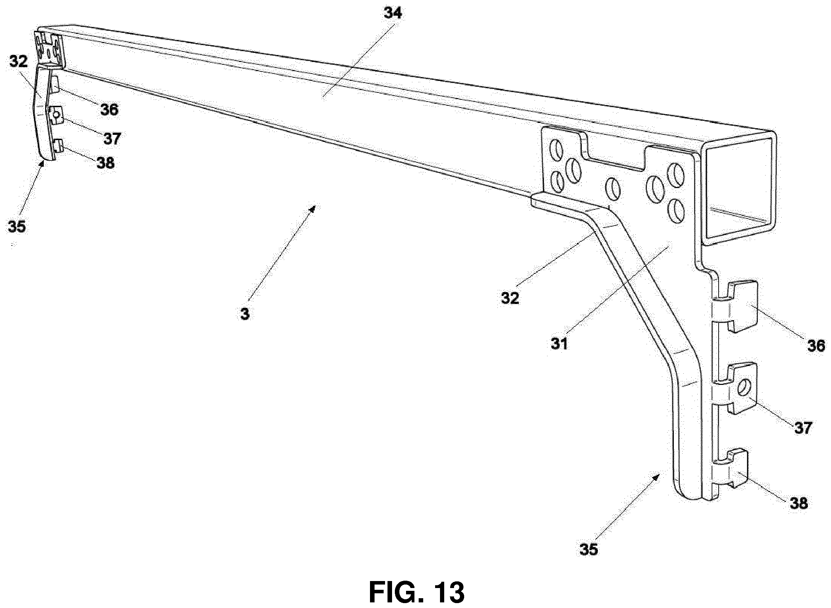

Figure 13 shows a stringer 3, having overall a U-shape, with the two arms of said U oriented downward. Stringer 3 is provided with a tubular section bar 34, too, which is the portion connecting the two arms of the U. At the two ends of said tubular section bar there are provided two symmetrical wings 35 (the two arms), provided with three hooks, one 36 of which is adjacent to said tubular section bar, an intermediate hook 37 and an end hook 38. Said hooks 36, 37, 38 are at a distance such that they can be fitted in three consecutive slots. Said teeth have an isosceles trapezium shape, with a peduncle thinner than the isosceles trapezium side connected to said extension 35. Said hooks 36, 37, 38 protrude from the two ends of stringer 3 oriented perpendicularly to the longitudinal axis of the stringer itself; all the hooks are oriented so as to lie on the same side of the tubular section bar 34. Wings 35, too, are produced by bending and soldering to tubular section bar 34 a substantially triangular portion of metal sheet. Once soldered, said extensions 35 have each a gusset 31 that is responsible of the stability of assembled objects. Said gusset 31 has a rib protruding from the opposed side of said gusset 31 with respect to hooks 36, 37, 38. Said rib 32 has a portion which is parallel to said tubular section bar 34, a portion perpendicular to tubular section bar 34 and a portion placed at 45° connecting the two said portions. Overall, said rib 32 gives the system an improved rigidity, while the top portion of said rib, parallel to ground, provides a small surface which can support a panel having a load capacity up to 70 kg.

In order to use an upright 1 of the display modular system according to the Figures 9 to 13, said modular system can be used in combination with at least a small base 201 according to the present invention, which can be indifferently mounted on a one-side slotted upright 1A or a two-side slotted upright 1B.

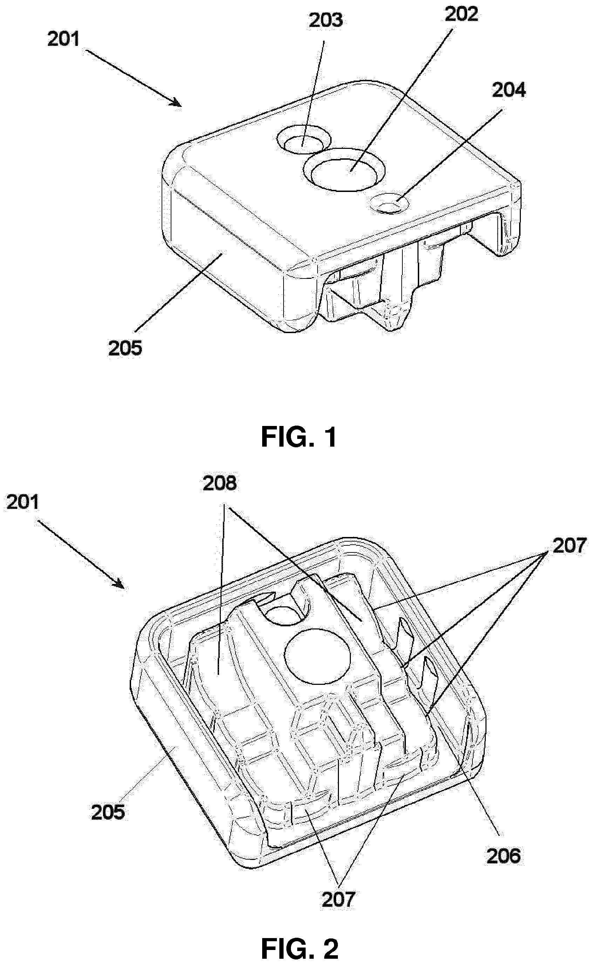

Figure 1 shows an axonometric view of the lower side of said small base 201; during its use, the lower side visible in the Figure is oriented towards the ground. The small base 201 has overall the shape of a parallelepiped with a square base; its lower side has a planar surface wherein there are provided three holes 202, 203 and 204. The holes 202 and 203 are meant to house the screws of two alternative feet 402 and 403. From the planar surface a U-shaped edge wall 205 originates, running on three sides of said small base.

Figure 2 shows an axonometric view of the upper side of said small base 201 oriented towards the upright 1 when the small base 201 is assembled with said upright 1. Here, too, is visible said U-shaped edge wall 205, while only the holes 202, 203 are visible, in that hole 204 is not a through hole.

Inside, close to said U-shaped edge wall 205 there is provided a groove 206 running on the four sides of said small base 201, which is meant to house the perimetral ends of upright 1. The small base 201 is inserted on the upright 1, while the assembly remains integral thanks to the presence of bumps 207 on which the upright must be forced. Said bumps 207 are present on all the four sides of small base 201. Said bumps are fitted in through forcing into the internal lumen of the transversal section of upright 1, said bumps protruding from the wall opposed to wall 205, delimiting on the internal side the groove 206. Therefore the pairs of said bumps protrude beyond the corresponding dimension or distance of the opposed internal walls of the upright, being fitted in with force and slight anelastic deformation among said walls.

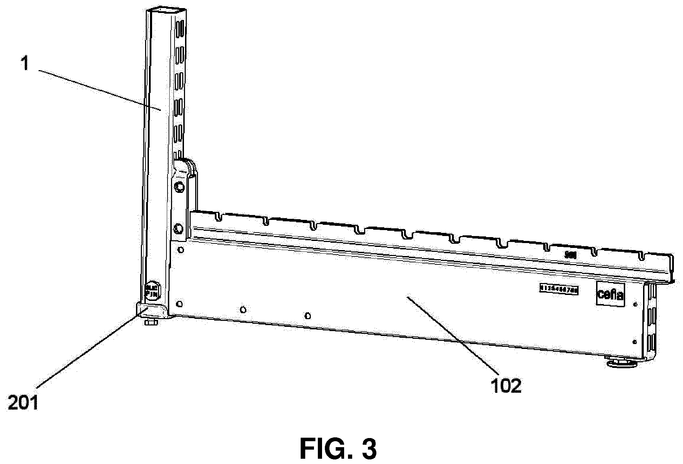

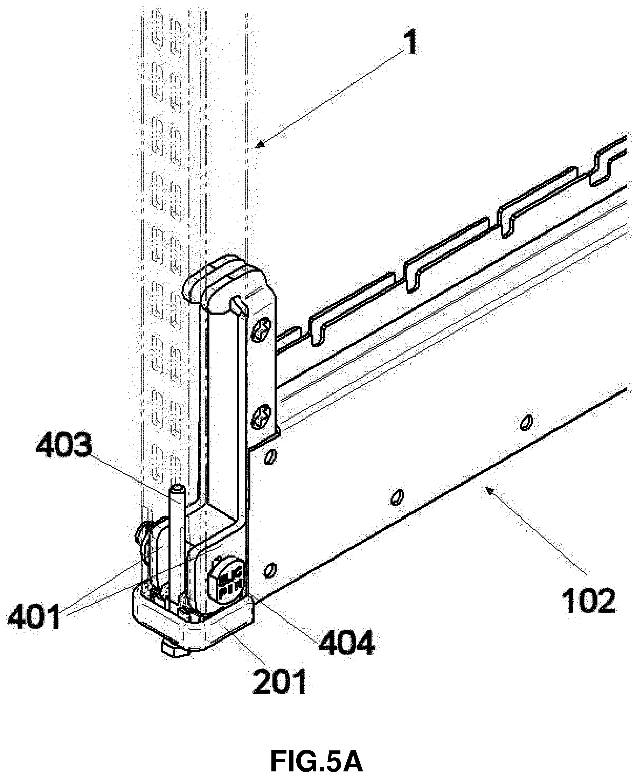

Moreover, the small base 201 is provided with two seats 208 shaped to house the lower portion of the small wings 401 of base 102 (see Figures 3 and 5A).

Figure 3 shows a base 102 according to patent EP2807958B1 of the same applicant, mounted on an upright 1 according to the display modular system shown in Figures 9 to 13, and a small base 201 according to the present invention.

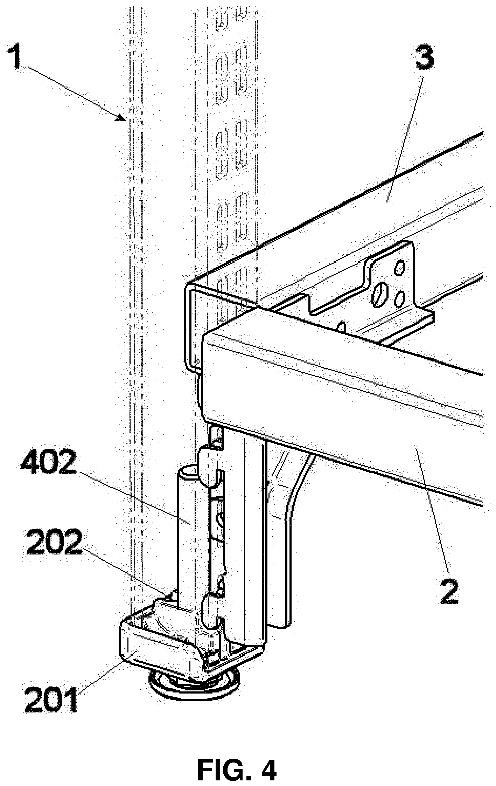

Figure 4 shows an upright 1 in dotted lines, assembled with a crosspiece 2 and a stringer 3 according to the display modular system shown in Figures 9 to 13, leaning to the ground with the intermediation of a small base 201 according to the present invention. When the small base 201 is assembled with an upright 1 only, without base 102, the foot 402 can be used, whose screw is housed in the hole 202.

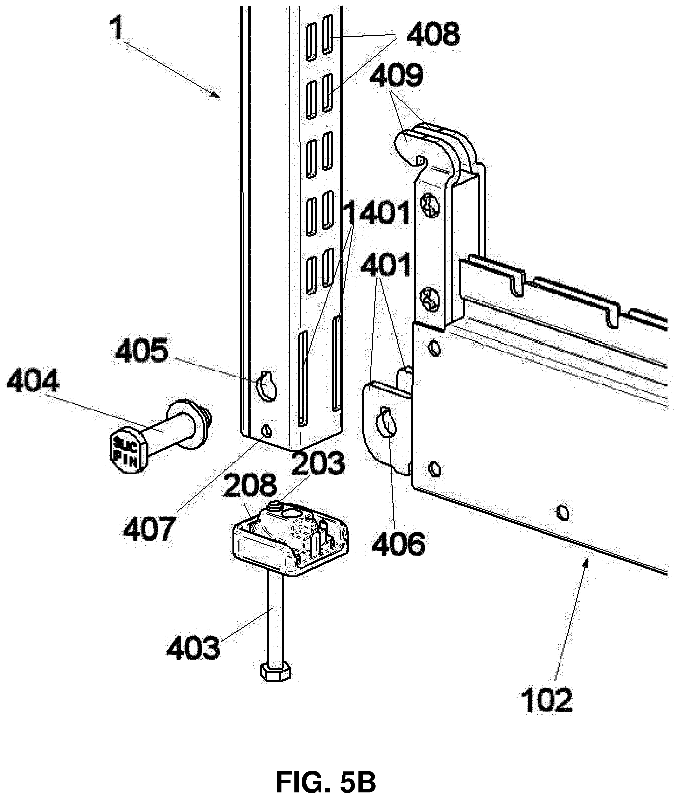

Figure 5A shows an axonometric view with a portion of upright in dotted lines, while Figure 5B shows an exploded axonometric view of the same assembly of Figure 3; overall the views have the aim of showing the reciprocal relationship among upright 1, base 102 and small base 201 once they were assembled. The small wings 401 of base 102 have the same shape of the seats 208 of the small base 201. The end perimeter of upright 1 is housed in the groove 206.

When the small base 201 is used on an assembly base 102-upright 1, wherein the base is provided according the quoted patent EP2807958B1, the assembling requires the use of a removable pin 404 (indicated as 4 in EP2807958B1) to ensure that the assembly base-upright is integral. Said pin 404 is inserted into specific holes 405 of said upright 1 and in specific bores 406 of said base 102. The encumbrance of the removable pin 404 requires to use the hole 203 to house the screw of a foot 403. Said hole 203 is eccentric with respect to the position of the hole 405 in a measure correspondent to the sum of the threaded segments of the pin 404 and of the screw of the foot 403. Moreover, said hole 203 is eccentric with respect to hole 202.

With reference in particular to Figures 5A and 5B, the base 102 is provided with a pair of small wings 401 which through slots 1401 provided in the lower terminal segment of upright 1 penetrate into the inside of said upright and engage with the seats 208 having corresponding shape provided on the small base 201. The two small wings are each aligned vertically with a coupling hook 409 provided at the end of a vertical end extension of the base 102 in correspondence with the head side coupling to upright 1. Said hooks 409 are laterally distanced in a measure corresponding to the distance between two rows of slots along upright 1, and coinciding with a pair of slots, the distance between said hooks and the corresponding small wings 401 being commeasured to the distance between the slots for the small wings and that for the hooks provided on the upright 1. Moreover, said hooks 409 are shaped so that they allow a prearranged coupling of said hooks in their corresponding slots 408 and an inserting rotation of said small wings 401 in the corresponding slots 1401 and in the seats 208 of the small base 201. Said arrangement and their functions are described in detail in EP2807958B1.

With reference to said arrangement, it is worthwhile noting that the U-shaped edge wall 205, delimiting the groove 206 engaging the end of the outer wall of upright 1 on the three sides of the square section of the small base 201 and of the upright 1, is open or is missing substantially along the side parallel and coincident with the side of the upright provided with coupling slots and engaging slots 1401 for the small wings 401 of the base 102. This allows the passage of said small wings 401 and the insertion of said small base into the seats 208.

Figure 6 shows an upright 1 on which a small base 201 according to the present invention is mounted, with the addition of a ground-fixing system 601.

Said ground fixing system 601 comprises a metal clamp 602 with a shape provided with a difference in height between the open slot 604 holding said foot 402, i.e. the head of the foot, and the hole 605 housing an anchor 603. The portion of clamp 602 coupling to foot 402 is higher than the clamp portion containing hole 605. Said difference in height allows to couple the clamp to the foot taking into account the thickness of the foot itself, and is well known in the art. The open slot 604 facilitates the coupling of the clamp 602 to foot 402 during assembling, allowing to assemble said ground-fixing system 601 with an already assembled upright.

In a preferred embodiment, a small metal plate 607 (shown in detail apart in Figure 6) is put on top of a small base 201, said small metal plate 607 having a U-shape prearranged with a groove 608 on its bottom and two holes 609 on its lateral walls. The open groove 608 engages the foot 402, i.e. its stalk, and allows to align the small plate 607 with the small base 201, bringing the holes 609 to substantially coincide with the holes 407. Said holes 609 provided in the small metal plate 607, once said small plate is assembled, are in correspondence of the respective holes 407 in upright 1, so as to insert two self-drilling and self-tapping screw drilling the wall 205 of small base 201, penetrating into the holes 407 of upright 1 to ensure that the upright 1 is integral to the ground-fixing system 601.

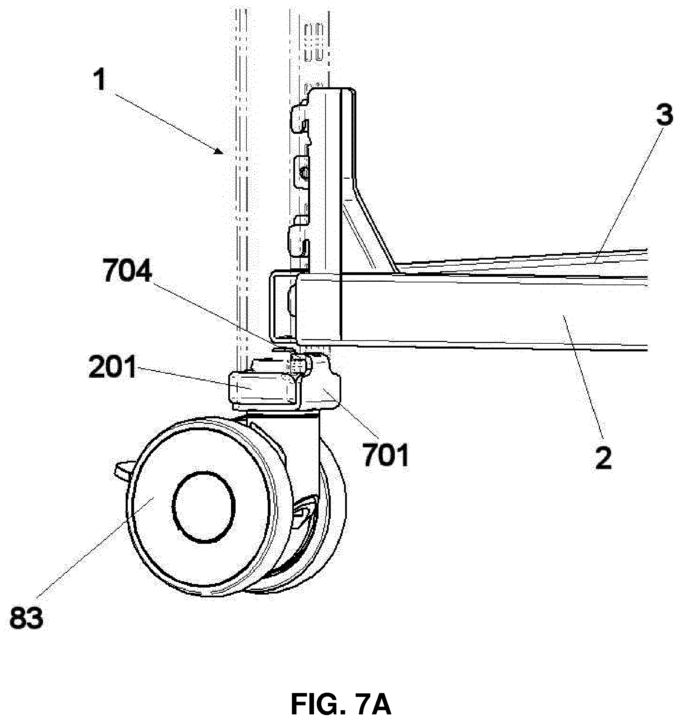

Figure 7A shows an axonometric view of the small base 201 assembled on a structure upright 1-crosspiece 2-stringer 3 in its turn mounted on a wheel 83 making part of the display modular system shown in Figures 9 to 13. The wheel 83 is integral with the small base 201 thanks to the presence of an anti-release plate 701.

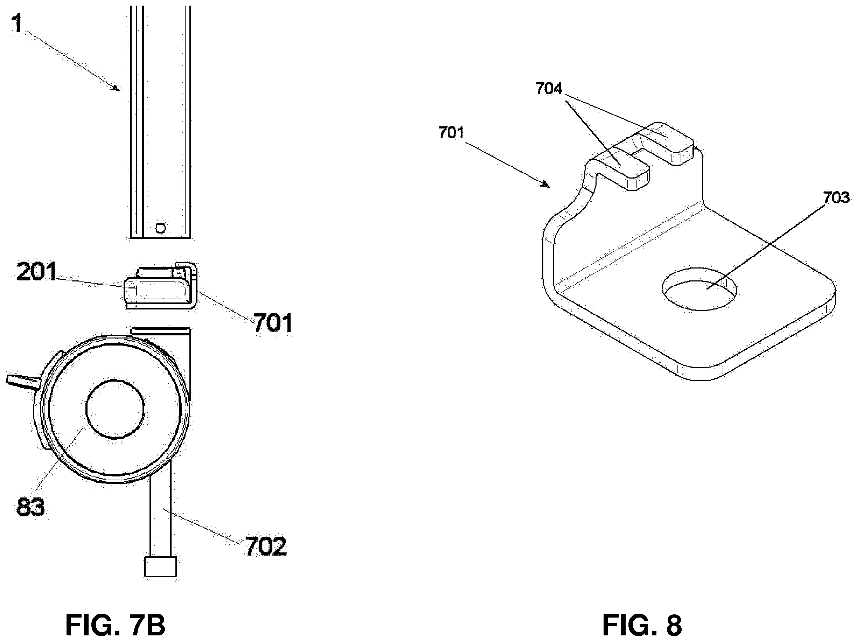

Figure 7B shows the exploded view of the same components shown in Figure 7A. The wheel 83 is fixed to the small base 201 through an allen screw 702 inserted into the threaded hole 202 of the small base 201. Between the small base 201 and the wheel 83 a plate 701 is inserted, whose hole 703 is crossed by the same allen screw 702. The presence of the allen screw 702 allows the components 701, 201, 83 to be integral.

Figure 8 shows an axonometric view of an anti-release plate 701 for the wheel. Said plate 701 has overall a lateral L-shaped section, wherein the base of the L has a square shape with dimensions corresponding to those of the small base 201; in the centre of the square a hole 703 is provided. At the upper end of the vertical branch of said L there are provided two small teeth 704 oriented to the same direction of the base of the L. Said small teeth have suitable dimensions so that once mounted they lean, on the internal side of the slots, on the lower side of the last couple of slots on upright 1.

Said anti-release plate 701 is necessary in that the wheel 83 is not in line with the upright 1, and this causes a moment which might determine the release of the small base 201 from upright 1. This is prevented by the presence of the plate 701 blocking the small base 201 on the upright through the small teeth 704 which are inserted in the slots of upright 1, from the internal side of said slots and opposed to the base of the L-shaped plate, so as to hold the small base 201 locked to the upright 1 interposed between the base of the L-shaped plate and the teeth hooked in the slots of the upright 1 and cooperating with the end edge of the slots, oriented in the opposed direction with respect to the lower side of the small base 201.

An assembling method for assembling the small base 201 with an upright 1 without base (Figure 4) comprises the following steps:
a. Mounting a small base 201 on an upright 1 inserting the terminal perimeter of said upright 1 in the groove 206 of the small base; said assembling is forced with a hammer, due to the presence of bumps 207;
b. Inserting the foot 402 screwing it into the specific hole 202 provided in the small base 201.

In case the structure needs fixing to the ground, a ground-fixing system 601 must be assembled too, and therefore to steps a and b the two following steps must be added:
c. Laying the small metal plate 607 with its upper face on the lower face of the small base 201; sitting the groove 608 into place against the foot 402, so as to allow to the holes 609 of the small plate to be aligned to the holes 407 of the upright 1; inserting into two holes 609 two self-drilling and self-tapping screws 606, perforating the walls 205 of the small base 201, intercepting the holes 407 of the upright 1 so that the small base 201 and the upright 1 are integral;
d. Hooking the plate 601 to the foot 402 through its open slot 604; inserting the anchor 603 into the hole 605 of the plate 601 and screwing the anchor 603 into the hole previously arranged in the ground.

An assembling method for assembling the small base 201 on an assembly upright 1-base 102 (Figure 5) comprises the following steps:
a. Mounting a small base 201 on said upright 1 inserting the terminal perimeter of said upright 1 into the groove 206; said assembling is forced with the hammer due to the presence of bumps 207;
b. Inserting the foot 403 screwing the screw into the specific 203 provided in the small base 201;
c. Mounting a base 102 on an upright 1 provided with a small base 201, inserting the small wings 401 of said base into the slots 1401 of the upright 1; inserting the pin 404 into the slots 405 provided in the upright 1 and into the bores 406 provided in the small wings 401 so as to stabilize the assembly upright 1-base 102.

In the case of assembling of small base 201 with a structure provided with wheels 83, the assembling method comprises the following steps:
a. Mounting a small base 201 on said upright 1 inserting the terminal perimeter of said upright 1 into the groove 206; said assembling is forced with the hammer due to the presence of bumps 207;
b. Assembling the three-dimensional upright 1-crosspiece 2-stringer 3 according to the modular system shown in Figures 9 to 13;
c. Inserting the small plate 701 with the small teeth 704 oriented toward the side of the upright 1 wherein a pair of slots are present, so that the upper wall of the plate 701 is tangent to the lower wall of the small base 201, and at the same time the lower portion of the small teeth 704 is tangent to the lower side of the pair of slots, all so that the hole 703 is perfectly in line with the hole 202 of the small base 201;
d. Positioning the wheel 83 with its hole in line with the hole 202 of the small base 201 and hole 703 of the small plate 701; the upper side of the structure surrounding the wheel sits into place on the lower wall of the small plate 701; inserting and screwing the allen screw 702 so that said components are integral.

It is hardly necessary to mention that said assembly can be disassembled in its basic components, which can all be re-used to build other combinations.

Finally, it is worthwhile noting that, in the preferred embodiment, the foot/adapter 101 is made of a magnesium alloy, preferably AM50 (EN-McMgAl5Mn EN-MC21220 AM 50), having the advantage of being very light and nonetheless shock-resistant. In contrast to plastics, the magnesium alloy distorts but does not break.

| | | | |
|---|---|---|---|
| 1A | one-side slotted upright | 206 | groove |
| 1B | two-side slotted upright | 207 | bumps |
| 2 | upper connection crosspiece | 208 | seats 401 |
| 2A | lower connection crosspiece | 404 | pin of the base |
| 3 | stringer | 402 | foot for upright without base |
| 10 | slot | 403 | foot for base |
| 24 | tubular section bar | 404 | pin |
| 25 | extension | 405 | upright slots |
| 26 | tooth adjacent to tubular section bar | 406 | small wing |
| 27 | intermediate tooth | 407 | hole |
| 28 | end tooth | 408 | slot |
| 29 | protrusion | 409 | hook |
| 31 | gusset | 601 | ground-fixing system |
| 32 | rib | 602 | clamp |
| 34 | tubular section bar | 603 | anchor |
| 35 | wings | 604 | open slot |
| 36 | hook adjacent to tubular section bar | 605 | hole |
| 37 | intermediate hook | 606 | screw |
| 38 | end hook | 607 | small metal plate |
| 83 | wheel | 608 | groove |
| 102 | base for upright | 609 | hole |
| 201 | small base | 701 | anti-release plate for wheel |
| 202 | hole | 702 | allen screw |
| 203 | hole | 703 | hole |
| 204 | hole | 704 | small tooth |
| 205 | U-shaped edge wall | 1401 | slots for small wings |

## Claims

1. Modular system comprising
at least an upright (1A, 1B) comprising a tubular transversal section or at least a lower or an upper terminal segment with transversal tubular section;
said modular system optionally comprising a foot (402); a base element (102) with a height-adjustable foot (403); a small metal plate (607), a system (601) on two levels and an anchor (603); an anti-release plate (701) for wheel and a wheel (83);
said modular system further comprising a small base (201) for uprights (1), said small base having an essentially parallelepiped shape with polygonal transversal section, optionally a square section, and comprising:
- an upper portion oriented toward the upright;
- a lower portion oriented toward the ground;
said small base
being provided with a groove (206) on at least three sides of the small base itself, and with a U-shaped edge wall (205) on just three sides of the small base itself, which groove has shape and dimensions substantially corresponding to the shape and dimension of the outer wall of the upright (1) in correspondence of one of its terminal ends, the groove being provided with coupling means, said small base (201) being used alternatively in combination with:
- an assembly comprising an upright (1) and a foot (402) for adjusting the height of the upright (1) itself;
- an assembly comprising an upright (1) a base element (102), and a height-adjustable foot (403);
- an assembly comprising an upright (1), a small metal plate (607) for the anchoring to the floor of said upright (1) through a system (601) on two levels and an anchor (603);
- an assembly comprising an upright (1), an anti-release plate (701) for wheel and a wheel (83).

2. Modular system according to claim 1, wherein the small base (201) is provided on its upper side oriented toward the upright with two seats (208) meant to house a pair of small wings (401) which make integral the fitting in between said upright (1) and a base (102) for said upright.

3. Modular system according to claim 1 or 2, wherein the small base (201) is provided with a first through hole (202) meant to house a foot (402) in combination with a linear upright (1) made of just one rectilinear tubular profile, and a second through hole (203) meant to house an alternative foot (403) in combination with an upright (1) and a base (102), which upright (1) and which base (102) are fixable to each other through a transversal pin (404) crossing small wings (401) engaging the base (102) of the upright (1) and the adjacent walls of the outer wall of the upright (1) itself.

4. Modular system according to claim 3, wherein the small base (201) is coupled to a ground-fixing system (601) said ground-fixing system (601) comprising:
- A metal clamp (602) in its turn comprising three sections, the two end sections lying on two distinct planes connected by the intermediate section; the upright end section comprising an open slot (604) and the ground end section comprising a hole (605) for an anchor (603) to be fixed to the ground;
- Optionally a U-shaped small metal plate (607) provided with a groove (608) open on the bottom and two holes (609) on the lateral walls; said holes (609) provided in the small metal plate (607), once said small metal plate (607) is mounted on the lower side oriented to the ground of the small base (201), coinciding with respective holes (407) in the upright (1), so as to insert at least one screw (606) perforating the wall (205) of the small base (201) to fix integrally the upright (1) to the ground-fixing system (601).

5. Modular system according to claim 3, wherein the small base (201) is coupled to an anti-release system (701) to ensure the integral coupling of an upright (1) to a wheel (83), said anti-release system comprising:
- a plate (701) having an overall lateral L-shaped section, wherein the base of the L forms an overlapping surface to the lower side of said small plate (201), while the other branch of said L-shaped plate bears coupling teeth to at least one slot of the upright (1) fitting into place against the terminal edge of the slot/s oriented in the opposed direction with respect to the lower side of the small base (201), the small base being locked between the base of the L-shaped plate and said teeth.

6. Modular system according to claims 3 and 5, wherein the small base (201) is coupled to an anti-release system (701) to ensure the integral coupling of an upright (1) to a wheel (83), said anti-release system comprising:
- a plate (701) having an overall lateral L-shaped section, wherein the base of the L has a square shape with dimensions corresponding to those of the small base (201); in the centre of the square a hole (703), and at the upper end of the vertical branch of said L two small teeth (704) oriented to the same direction of the base of the L being provided; said plate (701) surrounding said small base (201) interposing between said upright (1) and said wheel (83);
- said hole (703) being crossed by a screw (702), in its turn crossing a threaded bore (202) provided in the small base (201), so that said components (701, 201, 83) are integral.

7. Modular system according to one or more of the preceding claims, wherein the small base (201) is made of a magnesium alloy.

## Patentansprüche

1. Modulares System, umfassend:
mindestens einen Pfosten (1A, 1B), der einen röhrenförmigen Querschnitt umfasst, oder mindestens ein unteres oder ein oberes Endsegment mit einem röhrenförmigen Querschnitt;
wobei das modulare System optional einen Fuß (402); ein Basiselement (102) mit einem höhenverstellbaren Fuß (403);
eine kleine Metallplatte (607), ein System (601) auf zwei Ebenen und einen Anker (603); eine Auslöseplatte (701) für Rollen und Rollen (83) umfasst;
wobei das modulare System ferner eine kleine Basis (201) für Pfosten (1) umfasst, wobei die kleine Basis eine im Wesentlichen quaderförmige Form mit polygonalem Querschnitt, optional einem quadratischen Querschnitt,
aufweist und umfasst:
- einen oberen Abschnitt, der dem Pfosten zugewandt ist;
- einen unteren Abschnitt, der dem Boden zugewandt ist;
wobei die kleine Basis mit einer Nut (206) auf mindestens drei Seiten der kleinen Basis versehen ist und mit einer U-förmigen Außenwand (205) auf nur drei Seiten der kleinen Basis vorgesehen ist, wobei die Nut eine Form und
Abmessungen aufweist, die im Wesentlichen der Form und Abmessung der Außenwand des Pfostens (1) in Verbindung mit einem seiner Abschlussenden entsprechen, wobei die Nut mit Kopplungsmitteln versehen ist, wobei die kleine Basis (201) alternativ verwendet wird in Kombination mit:
- einer Anordnung, die einen Pfosten (1) und einen Fuß (402) zum Einstellen der Höhe des Pfostens (1) umfasst;
- einer Anordnung, die einen Pfosten (1), ein Basiselement (102) und einen höhenverstellbaren Fuß (403) umfasst;
- einer Anordnung, die einen Pfosten (1), eine kleine Metallplatte (607) zum Verankern mit dem Boden des Pfostens (1) mithilfe eines Systems (601) auf zwei Ebenen und einem Anker (603) umfasst;
- einer Anordnung, die einen Pfosten (1), eine Auslöseplatte (701) für Rollen und Rollen (83) umfasst.

2. Modulares System nach Anspruch 1, wobei die kleine Basis (201) auf ihrer dem Pfosten zugewandten Oberseite mit zwei Sitzen (208) versehen ist, die dazu gedacht sind, ein Paar kleine Flügel (401) aufzunehmen, die die feste Verbindung zwischen dem Pfosten (1) und einer Basis (102) für den Pfosten bilden.

3. Modulares System nach Anspruch 1 oder 2, wobei die kleine Basis (201) mit einem ersten Durchgangsloch (202) versehen ist, das dazu gedacht ist, einen Fuß (402) in Kombination mit einem linearen Pfosten (1) aus nur einem rechteckigen röhrenförmigen Profil aufzunehmen, und mit einem zweiten Durchgangsloch (203), das dazu gedacht ist, einen alternativen Fuß (403) in Kombination mit einem Pfosten (1) und einer Basis (102) aufzunehmen, wobei der Pfosten (1) und die Basis (102) mithilfe eines transversalen Stiftes (404) aneinander befestigt werden können und dabei die kleinen Flügel (401) queren, die in die Basis (102) des Pfostens (1) und die angrenzenden Wände der Außenwand des Pfostens (1) greifen.

4. Modulares System nach Anspruch 3, wobei die kleine Basis (201) mit einem Bodenbefestigungssystem (601) gekoppelt ist, wobei das Bodenbefestigungssystem (601) umfasst:
- einen Metallbügel (602), der wiederum drei Abschnitte umfasst, wobei die zwei Endabschnitte auf zwei verschiedenen Ebenen liegen, die durch den Zwischenabschnitt verbunden sind; wobei der Pfostenendabschnitt einen offenen Schlitz (604) umfasst und der Bodenendabschnitt ein Loch (605) für einen am Boden zu befestigenden Anker (603) umfasst;
- optional eine U-förmige kleine Metallplatte (607), die mit einer Nut (608) versehen ist, die am unteren Ende offen ist, und zwei Löchern (609) an den Seitenwänden; wobei die Löcher (609) in der kleinen Metallplatte (607) vorgesehen sind, wenn die kleine Metallplatte (607) auf der dem Boden zugewandten Seite der kleinen Basis (201) angebracht wird und mit den entsprechenden Löchern (407) in dem Pfosten (1) zusammenfällt, um mindestens eine Schraube (606) einzusetzen, die die Wand (205) der kleinen Basis (201) perforiert, um den Pfosten (1) fest an dem Bodenbefestigungssystem (601) zu befestigen.

5. Modulares System nach Anspruch 3, wobei die kleine Basis (201) mit einem Auslösesystem (701) gekoppelt ist, um die integrale Kopplung eines Pfostens (1) mit einer Rolle (83) sicherzustellen, wobei das Anti-Freigabesystem umfasst:
- eine Platte (701) mit einem lateralen L-förmigen Gesamtquerschnitt, wobei die Basis des L eine überlappende Fläche mit der Unterseite der kleinen Platte (201) bildet, während der andere Zweig der L-förmigen Platte Kopplungszähne für mindestens einen Schlitz des Pfostens (1) trägt, der gegen die Endkante der Schlitze passt, die in die entgegengesetzte Richtung mit Bezug auf die Unterseite der kleinen Basis (201) gewandt sind, wobei die kleine Basis zwischen der Basis der L-förmigen Platte und den Zähnen eingeschlossen ist.

6. Modulares System nach Anspruch 3 und 5, wobei die kleine Basis (201) mit einem Anti-Freigabesystem (701) gekoppelt ist, um die integrale Kopplung eines Pfostens (1) mit Rollen (83) sicherzustellen, wobei das Anti-Freigabesystem umfasst:
- eine Platte (701) mit einem lateralen L-förmigen Gesamtquerschnitt, wobei die Basis des L eine quadratische Form mit Abmessungen aufweist, die denen der kleinen Basis (201) entsprechen; in der Mitte des Quadrats ein Loch (703) und an dem oberen Ende des vertikalen Zweigs des L zwei kleine Zähne (704), die derselben Richtung zugewandt sind wie die Basis des L; wobei die Platte (701) die kleine Basis (201) umgibt, die zwischen den Pfosten (1) und den Rollen (83) angeordnet ist;
- wobei das Loch (703), das von einer Schraube (702) durchquert wird, wiederum eine Gewindebohrung (202) durchquert, die in der kleinen Basis (201) vorgesehen ist, sodass die Komponenten (701, 201, 83) integral sind.

7. Modulares System nach einem oder mehreren vorhergehenden Ansprüchen, wobei die kleine Basis (201) aus einer Magnesiumlegierung besteht.

## Revendications

1. Système modulaire comprenant :
au moins un montant (1A, 1B) comprenant une section transversale tubulaire ou au moins un segment terminal inférieur ou supérieur ayant une section tubulaire transversale,
ledit système modulaire comprenant facultativement un pied (402) ; un élément de base (102) avec un pied à hauteur ajustable (403) ; une petite plaque métallique (607), un système (601) sur deux niveaux et un ancrage (603) ; une plaque anti-libération (701) pour roue et une roue (83) ;
ledit système modulaire comprenant en outre une petite base (201) pour des montants (1), ladite petite base ayant une forme essentiellement parallélépipédique avec une section transversale polygonale, facultativement une section carrée, et comprenant :
- une partie supérieure orientée vers le montant ;
- une partie inférieure orientée vers le sol ;
ladite petite base comportant une rainure (206) sur au moins trois côtés de la petite base elle-même, et une paroi de bord en forme de U (205) sur seulement trois côtés de la petite base elle-même, ladite rainure ayant une forme et des dimensions correspondant sensiblement à la forme et à la dimension de la paroi externe du montant (1) en correspondance de l'une de ses extrémités terminales, la rainure comportant un moyen de couplage, ladite petite base (201) étant utilisée alternativement en combinaison avec :
- un ensemble comprenant un montant (1) et un pied (402) pour ajuster la hauteur du montant (1) lui-même ;
- un ensemble comprenant un montant (1), un élément de base (102), et un pied à hauteur ajustable (403) ;
- un ensemble comprenant un montant (1), une petite plaque métallique (607) pour l'ancrage au sol dudit montant (1) par l'intermédiaire d'un système (601) sur deux niveaux et un ancrage (603) ;
- un ensemble comprenant un montant (1), une plaque anti-libération (701) pour roue et une roue (83).

2. Système modulaire selon la revendication 1, dans lequel la petite base (201) comporte, sur son côté supérieur orienté vers le montant, deux sièges (208) destinés à loger une paire de petites ailettes (401) qui rendent d'un seul tenant le raccord entre ledit montant (1) et une base (102) pour ledit montant.

3. Système modulaire selon la revendication 1 ou 2, dans lequel la petite base (201) comporte un premier trou traversant (202) destiné à loger un pied (402) en combinaison avec un montant linéaire (1) constitué juste d'un profil tubulaire rectiligne, et un second trou traversant (203) destiné à loger un autre pied (403) en combinaison avec un montant (1) et une base (2), lequel montant (1) et laquelle base (102) pouvant être fixés l'un à l'autre par l'intermédiaire d'une broche transversale (404) traversant de petites ailettes (401) mettant en prise la base (102) du montant (1) et les parois adjacentes de la paroi externe du montant (1) lui-même.

4. Système modulaire selon la revendication 3, dans lequel la petite base (201) est couplée à un système de fixation au sol (601), ledit système de fixation au sol (601) comprenant :
- une pince métallique (602) comprenant à son tour trois sections, les deux sections d'extrémité reposant sur deux plans distincts reliés par la section intermédiaire ; la section d'extrémité de montant comprenant une fente ouverte (604) et la section d'extrémité de sol comprenant un trou (605) pour un ancrage (603) à fixer au sol ;
- facultativement, une petite plaque métallique en forme de U (607) comportant une rainure (608) ouverte sur le fond et deux trous (609) sur les parois latérales ; lesdits trous (609) étant formés dans la petite plaque métallique (607), une fois que ladite petite plaque métallique (607) est montée sur le côté inférieur orienté vers le sol de la petite base (201), coïncidant avec des trous respectifs (407) dans le montant (1), de façon à insérer au moins une vis (606) perforant la paroi (205) de la petite base (201) pour fixer le montant (1) d'un seul tenant au système de fixation au sol (601).

5. Système modulaire selon la revendication 3, dans lequel la petite base (201) est couplée à un système anti-libération (701) pour assurer le couplage intégral d'un montant (1) à une roue (83), ledit système anti-libération comprenant :
- une plaque (701) ayant une section globalement en forme de L latérale, la base du L formant une surface de chevauchement avec le côté inférieur de ladite petite plaque (201), tandis que l'autre branche de ladite plaque en forme de L supporte des dents de couplage sur au moins une fente du montant (1) s'installant contre le bord terminal d'une ou plusieurs fentes orientées dans la direction opposée par rapport au côté inférieur de la petite base (201), la petite base étant verrouillée entre la base de la plaque en forme de L et lesdites dents.

6. Système modulaire selon les revendications 3 et 5, dans lequel la petite base (201) est couplée à un système anti-libération (701) pour assurer le couplage intégral d'un montant (1) à une roue (83), ledit système anti-libération comprenant :
- une plaque (701) ayant une section globalement en forme de L latérale, la base du L ayant une forme carrée avec des dimensions correspondant à celles de la petite base (201) ; au centre du carré, un trou (703) et, au niveau de l'extrémité supérieure de la branche verticale dudit L, deux petites dents (704) orientées vers la même direction de la base du L étant formés ; ladite plaque (701) entourant ladite petite base (201) s'interposant entre ledit montant (1) et ladite roue (83) ;
- ledit trou (703) étant traversé par une vis (702), traversant à son tour un alésage fileté (202) formé dans la petite base (201), de telle sorte que lesdits composants (701, 201, 83) sont d'un seul tenant.

7. Système modulaire selon une ou plusieurs des revendications précédentes, dans lequel la petite base (201) est constituée d'un alliage de magnésium.
